## Europäisches Patentamt
## European Patent Office
## Office européen des brevets

(19)

(11) Numéro de publication: **0 010 504**
**B1**

(12)

# FASCICULE DE BREVET EUROPEEN

(45) Date de publication du fascicule du brevet: **08.09.82**

(51) Int. Cl.³: **G 03 B 21/54, G 11 B 23/02**

(21) Numéro de dépôt: **79400769.0**

(22) Date de dépôt: **19.10.79**

(54) **Dispositif pour le maintien en écartement constant des flasques d'une bobine pour film ou bande dans une boîte.**

(30) Priorité: **25.10.78 CH 11039/78**

(43) Date de publication de la demande:
**30.04.80 Bulletin 80/9**

(45) Mention de la délivrance du brevet:
**08.09.82 Bulletin 82/36**

(84) Etats contractants désignés:
**AT BE DE GB IT LU NL SE**

(56) Documents cités:
**AT - B - 293 175**
**CH - A - 503 290**
**DE - A - 2 364 397**
**DE - C - 631 285**
**DE - C - 963 306**
**FR - A - 2 322 425**
**US - A - 2 277 695**
**US - A - 3 050 853**
**US - A - 4 014 042**

(73) Titulaire: **GEFITEC S.A.**
**Avenue de la Gare, 5 Case postale 452**
**CH-1001 Lausanne 1 (CH)**

(72) Inventeur: **Posso, Patrick**
**10, avenue Jurigoz, 10**
**CH-1006 Lausanne (CH)**

(74) Mandataire: **Caunet, Jean et al,**
**Cabinet BEAU DE LOMENIE 55, rue d'Amsterdam**
**F-75008 Paris (FR)**

Courier Press, Leamington Spa, England.

**Dispositif pour le maintien en écartement constant des flasques d'une bobine pour film ou bande dans une boîte**

La présente invention concerne un dispositif pour le maintien en écartement constant des flasques d'une bobine rangée dans une boîte, que cette boîte soit ou non remplie d'un film cinématographique ou d'une bonade magnétique.

Un impératif majeur de la protection d'une bobine est de garantir la conservation parfaite de sa géométrie et de ses dimensions lorsqu'elle est rangée dans sa boîte. Cette garantie est déterminante pour assurer que les projections d'un film ou les auditions d'une bande, se succèdant dans le temps après des périodes de rangement de durées relativement longues, pourront être effectuées dans les meilleures conditions et obtenues avec les meilleurs résultats.

L'invention se propose d'atteindre ce but, en utilisant la boîte elle-même pour maintenir la bobine.

Une telle boîte présente un corps fixe, échancré dont l'échancrure prévue pour l'introduction et l'extraction de la bobine est susceptible d'être fermée par un couvercle de forme complémentaire, déplaçable parallelement aux faces du corps.

Conformément à l'invention, le corps et le couvercle sont solidaires d'éléments internes saillants, venus de moulage et formant des appuis différenciés pour coopérer par contact, les premiers avec la surface extérieure des flasques de la bobine et les deuxièmes avec la surface intérieure périphérique de ces flasques.

De préférence, les éléments d'appui s'étendent parallèlement aux directions de démoulage du corps et du couvercle qui coïncident, lorsque ceux-ci sont montés l'un sur l'autre, avec la direction d'ouverture du couvercle tout au moins au commencement de cette ouverture.

Suivant une forme de réalisation particulièrement avantageuse, appliquée à une boîte carrée dont le corps monolithique présente deux parois faciales réunies par une bordure définissant des chants postérieur, inférieur et supérieur, et dont le couvercle monolithique présente également deux parois faciales réunies par une bordure définissant des chants antérieur et supérieur, les parois faciales du corps et du couvercle sont reliées entre elles et avec le chant postérieur ou antérieur par au moins deux plaquettes s'étendant parallèlement et des deux côtés du plan médiateur de ce chant coïncidant avec un plan diamétral d'une bobine rangée dans cette boîte, et chaque plaquette délimite un ajourage en M conformé complémentairement à la section de cette bobine lorsqu'elle est pleine, section qui est prise suivant le plan de la plaquette considérée, l'ajourage présentant deux bords longs et deux bords courts pour l'appui respectivement des faces extérieures et de la périphérie des faces intérieures de ladite bobine.

De plus, dans cette forme de réalisation, le chant supérieur et le chant inférieur du corps de la boîte peuvent présenter en saillie dans la cavité interne de celle-ci des nervures longitudinales pour l'appui, par leurs extrémités, de la périphérie des faces intérieures au moins de la bobine pleine, précitée, rangée dans cette boîte.

Divers autres caractéristiques et avantages de l'invention ressortent d'ailleurs de la description détaillée qui suit.

La forme de réalisation précitée de l'object de l'invention est représentée, à titre d'exemple non limitatif, sur le dessin annexé.

Sur ce dessin:

— la Fig. 1 est une élévation-coupe prise suivant la ligne I—I de la Fig. 2 et montrant une boîte conforme à l'invention;
— les Fig. 2 et 3 sont des coupes transversales prises suivant les lignes II—II et respectivement III—III de la Fig. 1.

La boîte comporte un corps fixe, échancré dont l'échancrure 2 prévue pour l'introduction et l'extraction d'une bobine est susceptible d'être fermée par un couvercle 3 de forme complémentaire, déplaçable parallèlement aux faces du corps.

Dans l'exemple choisi, le corps 1 présente, venues de moulage, deux parois faciales 4, 5 réunies par une bordure définissant des chants postérieur 6, supérieur 7 et inférieur 8. L'échancrure 2 est délimitée, dans chaque paroi, par un bord vertical 9 et un bord horizontal 10 situés respectivement au voisinage du plan diamétral vertical 11 de la bobine 12 rangée dans cette boîte et en-dessous du plan diamétral horizontal 13 de cette bobine; ainsi, le chant supérieur 7 s'étend sur la moitié de la profondeur de ladite boîte et le chant inférieur 8, sur toute cette profondeur.

Dans cet exemple, le couvercle 3 présente, venues de moulage, deux parois faciales 14 et 15 réunies par une bordure définissant des chants antérieur 16 et supérieur 17. Mais alors, pour que le couvercle soit bien guidé coplanairement avec le corps lors de son ouverture et de sa fermeture, lesdites parois 14 et 15 du couvercle sont disposées à l'intérieur et contre les parois 4 et 5 du corps, vers le chant postérieur 6 et un peu au-delà du plan diamétral vertical 11 de la bobine 12 lorsque la boîte est fermée; d'ailleurs, ce guidage procède par pivotement autour d'un axe 18 situé dans le coin inférieur avant de la boîte et traversant les parois 4, 14, 15 et 5, le couvercle restant alors toujours emboîté dans la partie avant basse du corps.

La bobine 12 comporte deux flasque latéraux 19, 20 solidarisés entre eux par un moyeu

2

21 pour l'enroulement, par sa périphérie, du film ou de la bande et pour l'entraînement en rotation, par son centre, de ladite bobine. Il s'agit, suivant l'invention, de prendre et maintenir les flasques de la bobine lorsqu'on ferme le couvercle 3.

A cet effet, les parois faciales 4, 5 du corps 1 sont reliées entre elles et avec le chant postérieur 6 par deux plaquettes 22 et 23 s'étendant parallèlement et des deux côtés du plan diamétral horizontal 13 de la bobine 12; ce plan diamétral correspond sensiblement au plan médiateur du chant 6 qui est parallèle à la direction d'ouverture du couvercle tout au moins au commencement de cette ouverture.

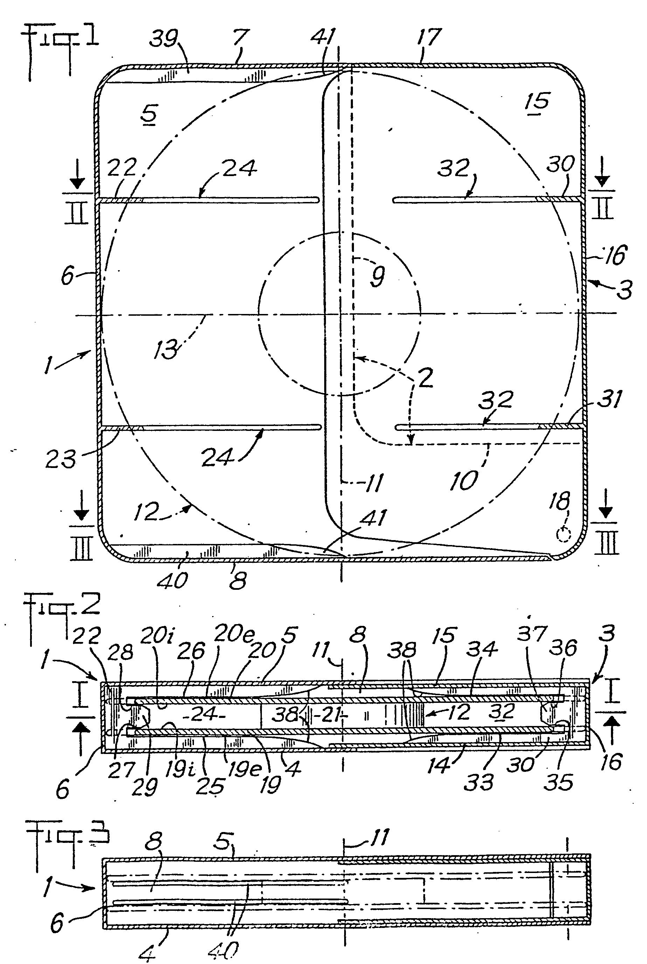

Chaque plaquette délimite un ajourage 24 (Fig. 2) conformé en M complémentairement à la section de la bobine 12 lorsqu'elle est pleine de film ou de bande, cette section étant prise évidement suivant le plan de la plaquette considérée. L'ajourage 24 présente alors deux bords d'appui longs 25 et 26 destinés à prendre contact avec les faces extérieures 19e et 20e des flasques de ladite bobine, ainsi que les bords d'appui courts 27 et 28 prévus pour prendre contact avec la périphérie (hors film ou bande) des faces intérieures 19i et 20i de ces flasques; les bords d'appui courts 27 et 28 définissent donc un téton 29 faisant saillie dans l'ajourage 24 pour le centrage intérieur des flasques de la bobine, tandis que les bords d'appui longs 25 et 26 assurent le positionnement extérieur de ces flasques relativement au téton.

D'une manière analogue, les parois faciales 14, 15 du couvercle 3 sont reliées entre elles et avec le chant antérieur 16 par deux plaquettes 30 et 31 s'étendant dans les mêmes plans que les précédentes 22 et 23 lorsque ledit couvercle est fermé. Chacune de ces plaquettes 30 et 31 délimite, comme les autres, un ajourage 32 (Fig. 2) présentant deux bords d'appui longs 33 et 34 pour le positionnement extérieur des flasques de la bobine, ainsi que deux bords d'appui courts 35 et 36 définissant un téton 37 pour le centrage intérieur de la périphérie desdits flasques.

Il est clair que l'utilisateur voulant ranger une bobine et ayant préalablement ouvert cette boîte, doit introduire cette bobine dans le corps 1 de cette boîte en coinçant ses flasques dans les plaquettes 22 et 23 de celui-ci, puis fermer le couvercle 3 pour coincer les plaquettes 30 et 31 de ce dernier sur lesdits flasques.

Pour faciliter cette opération, les bords d'appui longs 25, 26, 33 et 34 sont reliés aux parois faciales 4, 5, 14 et 15 par des rampes incurvées 38 et présentent une faible pente d'accès les faisant converger vers les tétons 29 et 37.

Il est important de remarquer que les plaquettes 22, 23 peuvent être formées lors du moulage du corps 1 et les plaquettes 30, 31, lors du moulage du couvercle 3, puisqu'elles sont perpendiculaires au chant postérieur 6 et respectivement, au chant antérieur 16.

Le dispositif de maintien peut avantageusement être complété, en prévoyant des appuis internes en haut et en bas de la bobine. A cet effet, le chant supérieur 7 du corps 1 présente en saillie, dans la cavité interne de la boîte, deux nervures longitudinales 39 et, de même, le chant inférieur 8 est solidaire de deux nervures 40. Ces nervures 39 et 40 s'étendent depuis le change postérieur 6 auquel elles sont perpendiculaires, jusqu'un peu au-delà du plan diamétral 11 où elles se terminent par un arrondi d'accès 41. Elles sont donc parfaitement réalisables lors du moulage du corps 1.

Les nervures 40 (Fig. 3) de même que les nervures 39, sont situées pour assurer, par leurs arrondis extrêmes 41, un centrage intérieur de la périphérie des flasques de la bobine en bas et en haut de la boîte et sont donc écartées de la même mesure que les bords 27 et 28 des tétons 29 des plaquettes 22 et 23 ou les bords 35 et 36 des tétons 37 des plaquettes 30 et 31.

L'invention n'est pas limitée à la forme de réalisation représentée et décrite en détail, car diverses modifications peuvent y être apportées sans sortir de son cadre. En particulier, la boîte peut être d'un autre type, par exemple à couvercle coulissant, à couvercle emboîtable, à couvercle basculant par biellettes, etc.

Le dispositif, objet de l'invention, est applicable aux boîtes pour le conditionnement de bobines pour film cinématographique ou bande magnétique, spécialement de bobines en matière plastique.

## Revendications

1. Dispositif pour le maintien en écartement constant des flasques (19, 20) d'une bobine pour film cinématographique ou bande magnétique, dans une boîte de rangement et de protection, cette boîte présentant un corps fixe (1), échancré, dont l'échancrure (2) prévue pour l'introduction et l'extraction de la bobine (12) est susceptible d'être fermée par un couvercle (3) de forme complémentaire déplaçable parallélement aux faces du corps, caractérisé en ce que le corps (1) et le couvercle (3) sont solidaires d'éléments internes saillants (22, 23; 30, 31), venus de moulage et formant des appuis différenciés pour coopérer par contact, les premiers (25, 26; 33, 34) avec la surface extérieure (19e, 20e) des flasques (19, 20) de la bobine (12) et les deuxièmes (27, 28; 35, 36) avec la surface intérieure (19i, 20i) périphérique de ces flasques.

2. Dispositif selon la revendication 1, caractérisé en ce que les éléments d'appui (22, 23; 30, 31) s'étendant parallélement aux directions de démoulage (13) du corps (1) et du couvercle (3) qui coïncident, lorsque ceux-ci sont montés l'un sur l'autre, avec la direction d'ouverture du couvercle tout au moins au commencement de cette ouverture.

3. Dispositif selon la revendication 2, appliqué à une boîte carrée dont le corps monolithique (1) présente deux parois faciales (4, 5) réunies par une bordure définissant des chants postérieur (6), intérieur (8) et supérieur (7), et dont le couvercle monolithique (3) présente également deux parois faciales (14, 15) réunies par une bordure définissant des chants antérieur (16) et supérieur (17).

caractérisé:

— en ce que les parois faciales (4, 5; 14, 15) du corps (1) et du couvercle (3) sont reliées entre elles et avec le chant postérieur (6) ou antérieur (16) par au moins deux plaquettes (22, 23; 30, 31) s'étendant parallèlement et des deux côtés du plan médiateur (13) de ce chant coïncidant avec un plan diamétral d'une bobine (12) rangée dans cette boîte;

— et en ce que chaque plaquette délimite un ajourage en M (24, 32) conformé complémentairement à la section de cette bobine lorsqu'elle est pleine, section qui est prise suivant le plan de la plaquette considérée, l'ajourage présentant deux bords longs (25, 26; 33, 34) et deux bords courts (27, 28; 35, 36) pour l'appui respectivement des faces extérieures (19e, 20e) et de la périphérie des faces intérieures (19i, 20i) de ladite bobine.

4. Dispositif selon la revendication 3, caractérisé en ce que le chant supérieur (7) et le chant inférieur (8) du corps (1) de la boîte présentent en saillie dans la cavité interne de celle-ci, des nervures longitudinales (39, 40) pour l'appui, par leurs extrémités (41), de la périphérie des faces intérieures au moins de la bobine pleine précitée, rangée dans cette boîte.

**Claims**

1. Device for keeping a constant space between the rims (19, 20) of a reel for films or magnetic tapes, inside a storage and protecting casing, said casing having a fixed and notched body (1) the notch (2) of which, provided for fitting in and removing the reel (12) is adapted to be closed by a lid (3) of complementary shape, shiftable in parallel to the faces of the body, characterised in that the body (1) and the lid (3) are integral with projecting internal elements (22, 23; 30, 31) molded in and forming distinct supports to cooperate by contact, the first ones (25, 26; 33, 34) with the outer surface (19e, 20e) of the rims (19, 20) of the reel (12) and the second ones (27, 28; 35, 36) with the inner peripheral surface (19i, 20i) of said rims.

2. Device according to claim 1, characterised in that the supporting elements (22, 23; 30, 31) extend in parallel to the stripping directions (13) of the body (1) which coincide when the latter are fitted one over the other, with the opening direction of the lid at least at the start of said opening.

3. Device according to claim 2, applied to a square casing of which the monolithic body (1) has two facial walls (4, 5) joined together by a border defining back (6), inner (8) and upped (7) edges, and of which the monolithic lid (3) also has two facial walls (14, 15) joined together by a border defining front (16) and upper (17) edges.

characterised:

— in that the facial walls (4, 5; 14, 15) of the body (1) and of the lid (3) a joined together and with the back edge (6) or the front edge (16) by at least two plates (22, 23; 30, 31) extending in parallel and both sides of the median plan (13) of said edge which coincides with a diametral plan of a reel (12) stored in said casing; and

— in that each plate defines an M-shaped perforation (24, 32) which is complementary in shape to the section of said reel when it is full, which section is taken along the plane of the plate considered, the perforation having two long edges (25, 26; 33, 34) and two short edges (27, 28; 35, 36) for the respective support of the external faces (19e, 20e) and of the periphery of the inner faces (19i, 20i) of said reel.

4. Device according to claim 3, characterised in that the upper edge (7) and the lower edge (8) of the body (1) of the casing are provided, projecting into the inside cavity thereof, with longitudinal ribs (39, 40), supporting by their ends (41), the periphery of at least the inner faces of the aforesaid full reel, stored in said casing.

**Patentansprüche**

1. Vorrichtung zum Konstanthalten des Abstandes der Flansche (19, 20) einer in einer Halterungs- und Schutzkassette untergebrachten Film- oder Magnetbandspule, welche Kassette einen fixen Körper (1) mit Ausnehmung aufweist, wobei die zum Einführen und Entnehmen der Spule (12) vorgesehene Ausnehmung (2) mit einem parallel zu den Stirnflächen des Körpers verschiebbaren Deckel (3) von komplementärer Gestalt verschließbar ist, dadurch gekennzeichnet, daß der Körper (1) und der Deckel (3) vorspringende, durch Formguß hergestellte und unterschiedliche Stützen zum kontaktierenden Zusammenwirken bildende Innenelemente (22, 23; 30, 31) aufweisen, wobei die ersten (25, 26; 33, 34) mit der Außenfläche (19e, 20e) der Flansche (19, 20) der Spule (12) und die zweiten (27, 28; 35, 36) mit der peripheren Innenfläche (19i, 20i) dieser Flansche zusammenwirken.

2. Vorrichtung nach Anspruch 1, dadurch gekennzeichnet, daß sich die Stützelemente (22, 23; 30, 31) parallel zu den Ausformrichtungen (13) des Körpers (1) und des Deckels (3) erstrecken, welche, wenn diese übereinandergeschoben sind, zumindest bei Beginn des Öffnens des Deckels mit der Deckelöffnungsrichtung zusammenfallen.

3. Vorrichtung nach Anspruch 2 für eine viereckige Kassette, deren einstückiger Körper (1) zwei durch eine eine hintere (6), untere (8) und obere (7) Schmalseite definierende Leiste verbundene Stirnwände (4, 5) und deren einstückiger Deckel (3) ebenfalls zwei durch eine eine vordere (16) und obere (17) Schmalseite definierende Leiste verbundene Stirnwände (14, 15) aufweisen, dadruch gekennzeichnet, daß die Stirnwände (4, 5; 14, 15) des Körpers (1) bzw. Deckels (3) miteinander und mit der hinteren (6) oder vorderen (16) Schmalseite durch zumindest zwei Platten (22, 23; 30, 31) verbunden sind, welche parallel und auf beiden Seiten der Mittelebene (13) dieser mit einer diametralen Ebene einer in dieser Kassette untergebrachten Spule (12) zusammenfallenden Schmalseite verlaufen, und daß jede Platte eine M-förmige, zum Querschnitt dieser Spule, wenn sie gefüllt ist, komplementäre Aussparung (24, 32) begrenzt, welcher Querschnitt gemäß der betreffenden Plattenebene vorgenommen ist, wobei die Aussparung zwei lange Ränder (25, 26; 33, 34) und zwei kurze Ränder (27, 28; 35, 36) zum Abstützen der Außenflächen (19e, 20e) bzw. des Umfanges der Innenflächen (19i, 20i) der Spule aufweist.

4. Vorrichtung nach Anspruch 3, dadurch gekennzeichnet, daß die obere Schmalseite (7) und die untere Schmalseite (8) des Körpers (1) der Kassette in den Innen-raum derselben vorspringende Längsrippen (39, 40) zur Stützung des Umfanges der Innenflächen von zumindest der obengenannten gefüllten, in dieser Kassette befindlichen Spule über deren Enden (41) aufweisen.

Fig.1

Fig.2

Fig.3